# EUROPEAN PATENT APPLICATION

(11) **EP 4 832 619 A1**
(43) Date of publication of application: **28.10.2026**
(21) Application number: 23961997.6
(22) Date of filing: 22.12.2023
(51) Int. Cl.: H04W 72/0457

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); FU, Zhe, Dongguan, Guangdong 523860 (CN)
(74) Representative: RGTH
(86) International application number: PCT/CN2023/141201
(87) International publication number: WO 2025/129675

(57) **Abstract**

The present application relates to a communication method and a communication device. The method comprises: a first communication device receiving configuration information, wherein the configuration information is used for configuring a correspondence between a bandwidth part (BWP) and user data information and/or time-domain information. In the embodiments of the present application, a BWP can be utilized to prevent the increase of the number of cells along with the increase of user data information and/or time-domain information, thereby reducing the resource consumption.

## Description

### TECHNICAL FIELD

The present application relates to the field of communications, and in particular, to a communication method and a communication device.

### BACKGROUND

In communication systems, cells are generally used to support different carriers. If the number of carriers to be aggregated increases, the number of cells to be aggregated also increases. To support a cell, relatively independent resources need to be consumed; and as the number of cells increases, the resources to be consumed also increase.

### SUMMARY

Embodiments of the present application provide a communication method and a communication device, which can reduce resource consumption of a communication system.

The embodiments of the present application provide a communication method, which includes:
receiving, by a first communication device, configuration information, where the configuration information is used for configuring a correspondence between a bandwidth part (BWP) and user data information and/or time domain information.

The embodiments of the present application provide a communication method, which includes:
configuring, by a second communication device, a correspondence between a BWP and user data information and/or time domain information.

The embodiments of the present application provide a first communication device, which includes:
a receiving unit, configured to receive configuration information, where the configuration information is used for configuring a correspondence between a BWP and user data information and/or time domain information.

The embodiments of the present application provide a second communication device, which includes:
a processing unit, configured to configure a correspondence between a BWP and user data information and/or time domain information.

The embodiments of the present application provide a communication device, which includes a transceiver, a processor and a memory. The memory is configured to store a computer program, the transceiver is configured to communicate with other devices, and the processor is configured to invoke the computer program stored in the memory and execute the computer program, to cause the communication device to perform the above communication methods.

The embodiments of the present application provide a chip for implementing the above communication methods.

Specifically, the chip includes: a processor, configured to invoke a computer program from a memory and execute the computer program, to cause a device equipped with the chip to perform the above communication methods.

The embodiments of the present application provide a computer-readable storage medium for storing a computer program, where the computer program, when executed by a device, causes the device to perform the above communication methods.

The embodiments of the present application provide a computer program product, which includes computer program instructions, where the computer program instructions cause a computer to perform the above communication methods.

The embodiments of the present application provide a computer program which, when executed on a computer, causes the computer to perform the above communication methods.

### BRIEF DESCRIPTION OF THE DRAWINGS

FIG. 1 is a schematic diagram of an application scenario according to the embodiments of the present application.
FIG. 2 is a schematic diagram of a split bearer of a protocol stack architecture.
FIG. 3 is a schematic diagram of BWP carrier aggregation.
FIG. 4 is a schematic flowchart of a communication method according to an embodiment of the present application.
FIG. 5 is a schematic flowchart of a communication method according to another embodiment of the present application.
FIG. 6 is a schematic flowchart of a communication method according to another embodiment of the present application.
FIG. 7 is a schematic flowchart of a communication method according to an embodiment of the present application.
FIG. 8 is a schematic flowchart of a communication method according to another embodiment of the present application.
FIG. 9 is a schematic flowchart of a communication method according to another embodiment of the present application.
FIG. 10 is a schematic block diagram of a first communication device according to an embodiment of the present application.
FIG. 11 is a schematic block diagram of a second communication device according to an embodiment of the present application.
FIG. 12 is a schematic block diagram of a communication device according to the embodiments of the present application.
FIG. 13 is a schematic block diagram of a chip according to the embodiments of the present application.
FIG. 14 is a schematic block diagram of a communication system according to the embodiments of the present application.

### DETAILED DESCRIPTION OF EMBODIMENTS

Technical solutions in the embodiments of the present application will be described below in conjunction with accompanying drawings in the embodiments of the present application.

The technical solutions in the embodiments of the present application may be applied to various communication systems, such as: a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (WiFi), a 5th-Generation (5G) communication system, or other communication systems.

Generally speaking, conventional communication systems support a limited number of connections and are relatively easy to implement. However, with the development of communication technologies, mobile communication systems support not only the conventional communications but also communications such as device to device (D2D) communication, machine to machine (M2M) communication, machine type communication (MTC), vehicle to vehicle (V2V) communication, or vehicle to everything (V2X) communication. The embodiments of the present application may also be applied to such communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other process devices connected to a wireless modem, a vehicle-mounted device, a wearable device, a terminal device in a next-generation communication system (such as an NR network), a terminal device in a future evolved public land mobile network (PLMN), or the like.

In the embodiments of the present application, the terminal device may be deployed on land, including indoor or outdoor, handheld, wearable or vehicle-mounted, or may also be deployed on water (e.g., on a ship), or may also be deployed in air (e.g., on an airplane, a balloon, and a satellite).

In the embodiments of the present application, the terminal device may be a mobile phone, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include full-featured and large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In embodiments of the present application, the network device may be a device used for communicating with a mobile device. The network device may be an access point (AP) in WLAN, an evolved base station (Evolutional NodeB, eNB or eNodeB) in LTE, a relay station or an access point, a vehicle-mounted device, a wearable device, a network device (gNB) in an NR network, or a network device in a future evolved PLMN network, or a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water, or other places.

In the embodiments of the present application, the network device may provide services for a cell, and the terminal device communicates with the network device through transmission resources (e.g., frequency domain resources, or in other words, frequency spectrum resources) used by the cell. The cell may be a cell corresponding to the network device (e.g., a base station). The cell may belong to a macro base station or belong to a base station corresponding to a small cell. The small cell here may include a metro cell, a micro cell, a pico cell, a femto cell or the like. These small cells have characteristics of small coverage range and low transmit power, which are applicable for providing a data transmission service with a high rate.

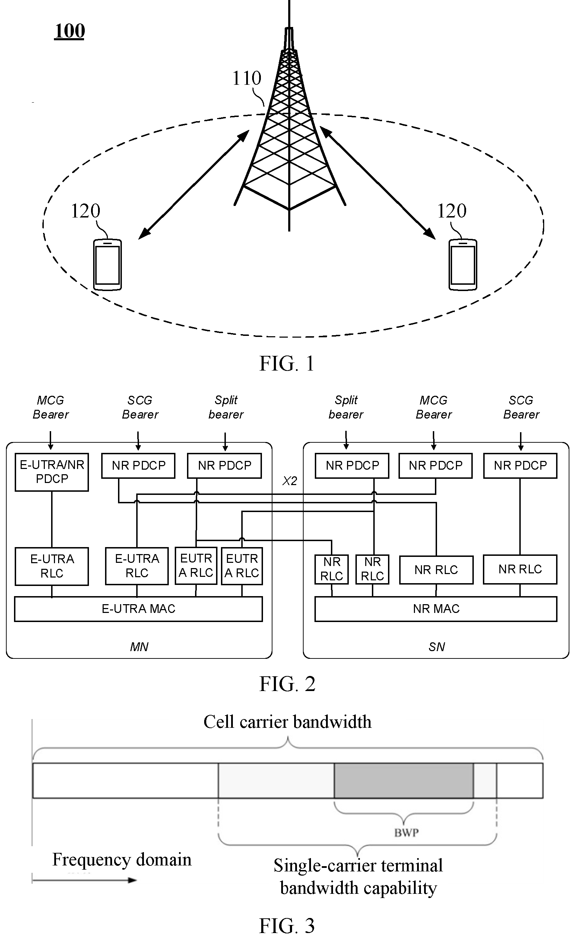

FIG. 1 exemplarily illustrates a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present application.

In an implementation, the communication system 100 may further include other network entities, such as a mobility management entity (MME) and an access and mobility management function (AMF), which are not limited in the embodiments of the present application.

The network device may further include an access network device and a core network device. That is, the wireless communication system further includes multiple core networks used for communicating with the access network device. The access network device may be an evolutional node B (which may be abbreviated as eNB or e-NodeB), a macro base station, a micro base station (also referred to as a "small base station"), a Pico base station, an access point (AP), a transmission point (TP), a new generation Node B (gNodeB) or the like in a long-term evolution (LTE) system, a next-generation (mobile communication system) (next radio, NR) system or an authorized auxiliary access long-term evolution (LAA-LTE) system.

It should be understood that in the embodiments of the present application, a device having a communication function in a network/system may be referred to as a communication device. In an example of the communication system illustrated in FIG. 1, the communication device may include a network device and a terminal device, which have the communication function. The network device and the terminal device may be specific devices in the embodiments of the present application, and will not be detailed further here. The communication devices may further include other devices in the communication system, such as a network controller, a mobile management entity or other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that associated objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence between the two, or may mean that there is an associated relationship between the two, or may mean a relationship of indicating and being indicated, a relationship of configuring and being configured, or the like.

To facilitate understanding of the technical solutions in the embodiments of the present application, the related technologies of the embodiments of the present application will be described below. The following related technologies, as optional solutions, may be arbitrarily combined with the technical solutions of the embodiments of the present application, which all falls within the protection scope of the embodiments of the present application.

### I Protocol Stack Architecture

In a 5G system, when there is a dual connectivity architecture, the protocol stacks of the user plane and the control plane are relatively complex.

In the dual connectivity architecture, a network node is composed of two nodes: namely a master node (MN) and a secondary node (SN). The packet data convergence protocol (PDCP) and service data adaptation protocol (SDAP) protocol stacks and the protocol stacks below the corresponding PDCP (e.g., radio link control (RLC), medium access control (MAC) and physical layer (PHY)) may be located at different network nodes. Within a terminal, there is no issue of distinguishing different nodes, but there is the issue of the role of cell groups, that is, a distinction is required to be made between a main cell group (MCG) and a secondary cell group (SCG). The difference between MCG and SCG comes from the different protocol layers (i.e., MAC and PHY) where different radio bearers converge.

For evolved universal mobile telecommunications system terrestrial radio access (E-UTRA) NR dual connectivity (EN-DC), from the perspective of the network side, the composition of a radio bearer is as illustrated in FIG. 2: when the RLC, MAC and PHY protocol stacks of a radio bearer are located at the MN, such a radio bearer is referred to as an MCG bearer, otherwise, it is referred to as an SCG bearer. The split bearer has radio links on both the MN and the SN, but only one PDCP protocol stack. The PDCP protocol stack may be at the MN or the SN. The purpose of the split bearer is to increase the traffic of the radio interface.

### II Carrier Aggregation

Within each cell group, one or more cells may be supported to enable the carrier aggregation function. In carrier aggregation (CA), two or more component carriers (CCs) are aggregated together. A UE may simultaneously receive or transmit on one or more CCs according to its capabilities. For example:
a UE with CA single timing advance (TA) capability may simultaneously receive and/or transmit on multiple CCs, where these CCs correspond to multiple serving cells that share the same timing advance (the multiple serving cells are grouped into one timing advance group (TAG)); and
a UE with CA multiple timing advance capability may simultaneously receive and/or transmit with different timing advances on multiple CCs corresponding to multiple serving cells (the multiple serving cells are grouped into multiple TAGs).

For example, the maximum number of CCs configured for a UE is: 16 for downlink (DL) and 16 for uplink (UL).

### III Cell and BWP

From the perspective of frequency domain power saving, the function of bandwidth part (BWP) is introduced in 5G. As mentioned above, the carrier bandwidth of NR is much larger than the carrier bandwidth of LTE, and many core frequency bands may support a typical 100MHz carrier bandwidth. The advantage of large bandwidth is that high transmission rates can be achieved. However, if the service mode is small data volume transmission or discontinuous service, it is very uneconomical for the UE to operate in a large bandwidth mode. A BWP may be a bandwidth smaller than both the carrier bandwidth of a cell and the bandwidth capability of a terminal. When the data volume transmitted over the air interface is relatively low, the terminal may operate in a smaller bandwidth for reception and transmission under dynamic configuration from the network side. In this way, the radio frequency front-end components, radio frequency transceivers and baseband signal processing modules of the terminal may all operate under the condition of a smaller processing bandwidth and a lower processing clock, so as to operate in a state with lower power consumption.

Since the BWP may be an access bandwidth smaller than both the cell system bandwidth and the terminal bandwidth capability, all reception and transmission operations of the terminal may be performed within the smaller bandwidth, thereby achieving more flexible, more efficient and lower power consumption terminal operations in a 5G large-bandwidth system. The maximum single-carrier system bandwidth of LTE is 20MHz, and the single-carrier bandwidth capability of a terminal is also 20MHz, so there is no case where the terminal capability is less than the cell system bandwidth. In the 5G NR system, the maximum carrier bandwidth will be significantly increased (e.g., to 400MHz), while the improvement of the terminal bandwidth capability cannot significantly keep up with the improvement of the network side (e.g., 100MHz). In addition, the terminal is not always required to operate at its maximum bandwidth capability. To save power and achieve more efficient frequency domain operations, the terminal may operate in a smaller bandwidth, which is the BWP, as illustrated in FIG. 3.

In summary, the NR system supports the hierarchical concepts of cell group-cell and carrier-BWP.

Since "cell" is used to support different carriers, when the number of carriers to be aggregated increases, the number of cells to be aggregated also increases. In a communication system, to support a cell, relatively independent resources need to be consumed, such as a reference signal, a synchronization signal and physical downlink broadcast channel block (SS & PBCH Block, abbreviated as SSB), a Hybrid Automatic Repeat reQuest (HARQ) buffer, and a control channel resource. For example, different cells require to independently define SSB reference signals; different cells occupy different HARQ buffers; different cells require independent control channel resources, and so on.

Typically, independent parameters are required to be configured for each cell, and different parameters correspond to relatively independent resource consumption, for example, the reference is the information element (IE) of serving cell configuration (Serving Cell Config).

In the embodiments of the present application, the concept of a cell may be further extended, for example, from covering only intra-band contiguous frequency resources to covering intra-band non-contiguous and inter-band frequency resources, to avoid a linear increase in the number of cells with aggregated frequency resources. In this way, the concept of a cell group in the NR system may be weakened or eliminated, and one cell may be used to aggregate multiple traditional carriers. Therefore, some functions originally completed through the concept of a cell group in the NR system may be completed by cells, and functions completed through the concept of a cell may be completed by the BWP. For example, in the embodiments of the present application, the BWP may be used to cover various different situations (e.g., intra-band non-contiguous frequency resources, inter-band frequency resources, or the like).

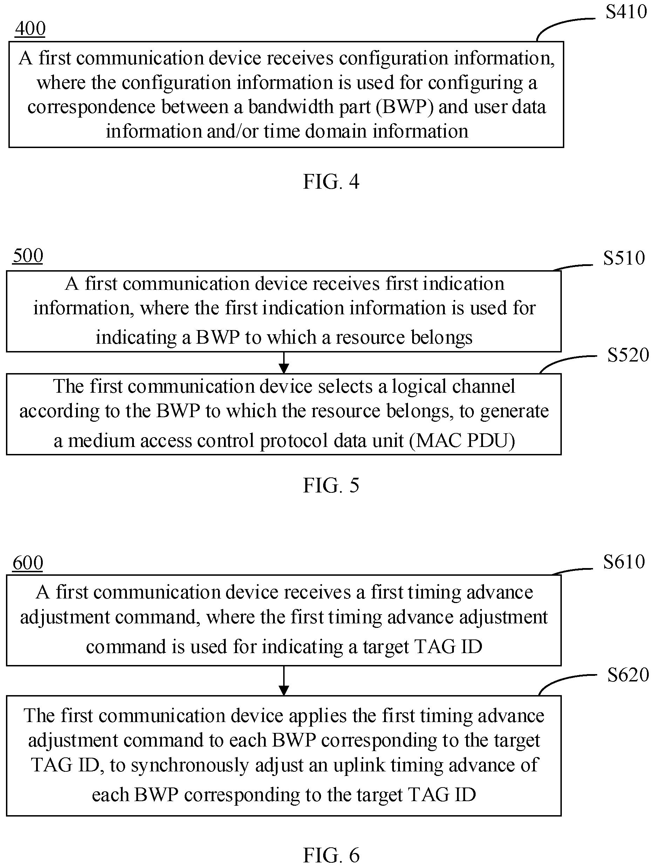

FIG. 4 is a schematic flowchart of a communication method 400 according to an embodiment of the present application. Optionally, the method may be applied to the system illustrated in FIG. 1, but is not limited thereto. The method includes at least part of the following content.

In S410: a first communication device receives configuration information, where the configuration information is used for configuring a correspondence between a bandwidth part (BWP) and user data information and/or time domain information.

In the embodiments of the present application, the first communication device may receive the configuration information from a second communication device. For example, the first communication device may be a terminal device, and the second communication device may be a network device. The BWP may be smaller than the maximum carrier bandwidth supported by a cell and/or the maximum bandwidth supported by a terminal. In one case, the network device may configure an applicable BWP for user data information, and may also configure corresponding user data information for a BWP. In another case, the network device may configure corresponding time domain information for a BWP, and may also configure a corresponding BWP for time domain information. In the embodiments of the present application, the BWP may be utilized to prevent the number of cells from increasing with the increase of the user data information and/or the time domain information, thereby reducing resource consumption.

In an implementation, the user data information may include a logical channel. The correspondence between the BWP and the user data information includes a correspondence between the BWP and the logical channel.

In an implementation, the correspondence between the BWP and the logical channel includes at least one of:
multiple BWPs applicable to one logical channel; or
multiple logical channels corresponding to one BWP.

For example, the correspondence between the BWP and the logical channel includes that logical channel 1 is applicable to BWP1 and BWP2, and logical channel 2 is applicable to BWP2 and BWP3. As another example, the correspondence between the BWP and the logical channel includes that BWP2 corresponds to logical channel 1 and logical channel 2, and BWP3 corresponds to logical channel 2 and logical channel 3.

FIG. 5 is a schematic flowchart of a communication method 500 according to another embodiment of the present application. The method may include one or more features of the above methods. In an implementation, the method further includes the following.

In S510: the first communication device receives first indication information, where the first indication information is used for indicating a BWP to which a resource belongs.

In S520: the first communication device selects a logical channel according to the BWP to which the resource belongs, to generate a medium access control protocol data unit (MAC PDU).

In the embodiments of the present application, if the first communication device is a terminal device and the second communication device is a network device, the terminal device may receive the first indication information from the network device. For example, if the first indication information indicates a certain resource (e.g., PRB1), a search may be performed in the correspondence between the BWP and the logical channel according to the BWP (e.g., BWP1) to which PRB1 belongs. If it is found that BWP1 corresponds to logical channel 1, the MAC PDU may be generated based on logical channel 1 and other logical channels that may be mapped to BWP1. As another example, if the first indication information indicates a certain resource (e.g., PRB10), a search may be performed in the correspondence between the BWP and the logical channel according to the BWP (e.g., BWP2) to which PRB10 belongs. If it is found that BWP2 corresponds to logical channel 1 and logical channel 2, the MAC PDU may be generated using logical channel 1, logical channel 2 and other logical channels that may be mapped to BWP2.

In an implementation, the configuration information is further used for configuring a correspondence between a carrier and/or a cell and the user data information.

In the embodiments of the present application, the correspondence between the carrier and/or the cell and the user data information and the correspondence between the BWP and the user data information may be configured through the same information, or may be configured through different information. For example, both the correspondence between the carrier and/or the cell and the user data information and the correspondence between the BWP and the user data information are simultaneously configured through one radio resource control (RRC) message. As another example, the correspondence between the carrier and/or the cell and the user data information is configured through one RRC message, and the correspondence between the BWP and the user data information is configured through another RRC message.

In an implementation, the correspondence between the carrier and/or the cell and the user data information includes a correspondence between the carrier and/or the cell and a logical channel.

In an implementation, the correspondence between the carrier and/or the cell and the logical channel includes at least one of:
one or more carriers applicable to one logical channel;
one or more cells applicable to one logical channel;
one or more logical channels corresponding to one carrier; or
one or more logical channels corresponding to one cell.

In the embodiments of the present application, the correspondence between the carrier and/or the cell and the user data information and the correspondence between the BWP and the user data information may be configured independently or in combination. For example, cell A, cell B, carrier C, and BWP1 under cell A that are applicable to logical channel 1 may be configured. As another example, cell B, carrier C, and BWP1 and BWP2 under cell B that are applicable to logical channel 2 may be configured.

In an implementation, the method further includes:
receiving, by the first communication device, second indication information, where the second indication information is used for indicating at least one of a carrier, a cell or a BWP to which a resource belongs; and
selecting, by the first communication device, a logical channel according to the at least one of the carrier, the cell or the BWP to which the resource belongs, to generate a MAC-PDU.

In the embodiments of the present application, if the first communication device is a terminal device and the second communication device is a network device, the terminal device may receive the second indication information from the network device. For example, if the second indication information received by the first communication device includes PRB20, a search is performed in the above various correspondences. It may be found that PRB20 belongs to BWP2 under cell B, and then it is further found that BWP2 corresponds to logical channel 2 and other logical channels that may be mapped to BWP2, to generate the MAC-PDU.

As another example, if the received second indication information includes PRB30, a search is performed in the above various correspondences. It may be found that PRB30 belongs to BWP3 under carrier C, and then it is further found that BWP3 corresponds to logical channel 2 and logical channel 3. The MAC PDU may be generated using logical channel 2, logical channel 3 and other logical channels that may be mapped to BWP3.

FIG. 6 is a schematic flowchart of a communication method 600 according to another embodiment of the present application. The method may include one or more features of the above methods. In an implementation, the time domain information may include timing advance (TA) information. The correspondence between the BWP and the time domain information includes a correspondence between the BWP and the timing advance information.

In an implementation, the TA information may include a timing advance group identifier (TAG ID). The correspondence between the BWP and the timing advance information includes a correspondence between the BWP and the TAG ID.

In an implementation, the correspondence between the BWP and the TAG ID includes at least one of:
a TAG ID to which the BWP belongs; or
a BWP corresponding to a specific TAG ID.

For example, the correspondence between the BWP and the TAG ID includes that TAG ID1 is applicable to BWP1 and BWP2, and TAG ID2 is applicable to BWP2 and BWP3. As another example, the correspondence between the BWP and the TAG ID includes that BWP2 corresponds to TAG ID1 and TAG ID2, and BWP3 corresponds to TAG ID2 and TAG ID3.

In an implementation, the method further includes the following.

In S610: the first communication device receives a first timing advance adjustment command, where the first timing advance adjustment command is used for indicating a target TAG ID.

In S620: the first communication device applies the first timing advance adjustment command to each BWP corresponding to the target TAG ID, to synchronously adjust an uplink timing advance of each BWP corresponding to the target TAG ID.

In the embodiments of the present application, if the first communication device is a terminal device and the second communication device is a network device, the terminal device may receive the first timing advance adjustment command from the network device. For example, if the first timing advance adjustment command includes or is applicable to a certain target TAG ID (e.g., TAG ID1), a search may be performed in the correspondence between the BWP and the TAG ID according to TAG ID1. If it is found that BWP1 and BWP2 correspond to TAG ID1, the uplink TAs of BWP1 and BWP2 may be synchronously adjusted. As another example, if the first timing advance adjustment command includes or is applicable to a certain target TAG ID (e.g., TAG ID3), a search may be performed in the correspondence between the BWP and the TAG ID according to TAG ID3. If it is found that BWP3 corresponds to TAG ID3, the uplink TA of BWP3 may be adjusted.

In an implementation, the configuration information is further used for configuring a correspondence between a carrier and/or a cell and timing advance information.

In the embodiments of the present application, the correspondence between the carrier and/or the cell and the timing advance information and the correspondence between the BWP and the timing advance information may be configured through the same information, or may be configured through different information. For example, both the correspondence between the carrier and/or the cell and the timing advance information and the correspondence between the BWP and the timing advance information are simultaneously configured through one RRC message. As another example, the correspondence between the carrier and/or the cell and the timing advance information is configured through one RRC message, and the correspondence between the BWP and the timing advance information is configured through another RRC message.

In an implementation, the correspondence between the carrier and/or the cell and the timing advance information includes a correspondence between the carrier and/or the cell and a TAG ID.

In an implementation, the correspondence between the carrier and/or the cell and the TAG ID includes at least one of:
a TAG ID to which the carrier belongs;
a TAG ID to which the cell belongs;
a carrier corresponding to a specific TAG ID; or
a cell corresponding to a specific TAG ID.

In the embodiments of the present application, the correspondence between the carrier and/or the cell and the timing advance information and the correspondence between the BWP and the timing advance information may be configured independently or in combination. The network device may configure different carriers, cells and BWPs in these carriers and cells, and indicate the TAG ID to which each of these carriers, cells and BWPs belongs. For example, it may be configured that BWP1, cell B and carrier C belong to TAG ID1, BWP2 under cell B and carrier C belong to TAG ID2, and carrier C and BWP2 under cell A belong to TAG ID4. As another example, it may be configured that TAG ID2 corresponds to BWP2 under cell B and carrier C, TAG ID3 corresponds to carrier C, and TAG ID5 corresponds to BWP2 under cell B.

In an implementation, the method further includes:
receiving, by the first communication device, a second timing advance adjustment command, where the second timing advance adjustment command is used for indicating a target TAG ID; and
applying, by the first communication device, the second timing advance adjustment command to at least one of each carrier, each cell, each BWP in each carrier or each BWP in each cell corresponding to the target TAG ID, to synchronously adjust an uplink timing advance of the at least one of each carrier, each cell, each BWP in each carrier or each BWP in each cell corresponding to the target TAG ID.

In the embodiments of the present application, if the first communication device is a terminal device and the second communication device is a network device, the terminal device may receive the second timing advance adjustment command from the network device. For example, if the second timing advance adjustment command includes or is applicable to a certain target TAG ID (e.g., TAG ID1), a search may be performed in the correspondence between at least one of the carrier, the cell or the BWP and the TAG ID according to TAG ID1. If it is found that TAG ID1 corresponds to BWP1 under cell A, cell B and carrier C, the uplink TAs of BWP1 under cell A, cell B and carrier C may be synchronously adjusted. As another example, if the first timing advance adjustment command includes or is applicable to a certain target TAG ID (e.g., TAG ID2), a search may be performed in the correspondence between at least one of the carrier, the cell or the BWP and the TAG ID according to TAG ID2. If it is found that TAG ID2 corresponds to BWP2 under cell B and carrier C, the uplink TAs of BWP2 under cell B and carrier C may be adjusted.

In an implementation, the method further includes: in a case where a first timer of a target TAG expires, if the first timer is associated with a secondary timing advance group (STAG), performing, by the first communication device, at least one of the following on all serving cells, carriers or BWPs belonging to the target TAG:
flushing a HARQ buffer;
if a physical uplink control channel (PUCCH) is configured, notifying a radio resource control (RRC) layer to release the PUCCH;
if a sounding reference signal (SRS) is configured, notifying an RRC layer to release the SRS;
clearing a configured downlink resource assignment and a configured uplink grant;
clearing a physical uplink shared channel (PUSCH) resource for semi-persistent channel state information (CSI) reporting; or
maintaining a timing advance amount N_{TA} of the target TAG.

For example, when the first timer of TAG ID1, timeAlignmentTimer, expires, the above operations such as flushing, releasing and clearing may be performed on BWP1 under cell A, cell B and carrier C corresponding to TAG ID1.

As another example, when the first timer of TAG ID2, timeAlignmentTimer, expires, the above operations such as flushing, releasing and clearing may be performed on BWP1 under cell A, cell B and carrier C corresponding to TAG ID1.

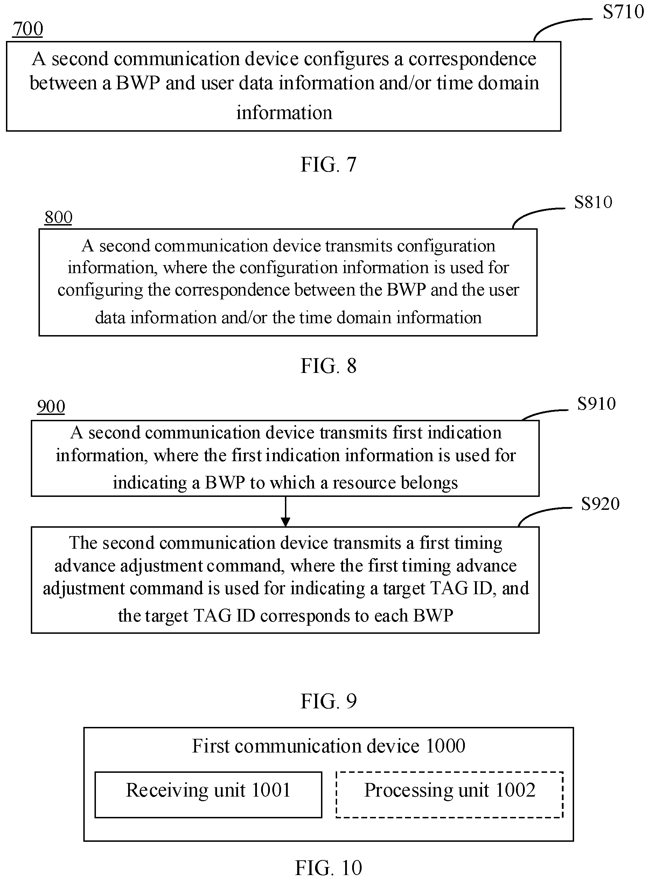

FIG. 7 is a schematic flowchart of a communication method 700 according to an embodiment of the present application. Optionally, the method may be applied to the system illustrated in FIG. 1, but is not limited thereto. The method includes at least part of the following content.

In S710: a second communication device configures a correspondence between a BWP and user data information and/or time domain information.

FIG. 8 is a schematic flowchart of a communication method 800 according to another embodiment of the present application. Optionally, the method may be applied to the system illustrated in FIG. 1, but is not limited thereto. The method includes at least part of the following content.

In S810: the second communication device transmits configuration information, where the configuration information is used for configuring the correspondence between the BWP and the user data information and/or the time domain information.

In an implementation, S710 may also be performed before S810.

In an implementation, the correspondence between the BWP and the user data information includes a correspondence between the BWP and a logical channel.

In an implementation, the correspondence between the BWP and the logical channel includes at least one of:
multiple BWPs applicable to one logical channel; or
multiple logical channels corresponding to one BWP.

FIG. 9 is a schematic flowchart of a communication method 900 according to another embodiment of the present application. The method may include one or more features of the above methods. In an implementation, the method further includes the following.

In S910: the second communication device transmits first indication information, where the first indication information is used for indicating a BWP to which a resource belongs.

In an implementation, the configuration information is further used for configuring a correspondence between a carrier and/or a cell and the user data information.

In an implementation, the correspondence between the carrier and/or the cell and the user data information includes a correspondence between the carrier and/or the cell and a logical channel.

In an implementation, the correspondence between the carrier and/or the cell and the logical channel includes at least one of:
one or more carriers applicable to one logical channel;
one or more cells applicable to one logical channel;
one or more logical channels corresponding to one carrier; or
one or more logical channels corresponding to one cell.

In an implementation, the method further includes: transmitting, by the second communication device, second indication information, where the second indication information is used for indicating at least one of a carrier, a cell or a BWP to which a resource belongs. After receiving the second indication information, the first communication device may select a logical channel based on the at least one of the carrier, the cell or the BWP to which the resource belongs, to generate a MAC PDU. The transmitting of the second indication information by the second communication device and the transmitting of the first indication information by the second communication device may be two parallel manners. For example, if the information that the network device needs to indicate includes more than just the BWP, the network device may transmit the second indication information to the terminal device.

In an implementation, the correspondence between the BWP and the time domain information includes a correspondence between the BWP and timing advance information.

In an implementation, the correspondence between the BWP and the timing advance information includes a correspondence between the BWP and a timing advance group identifier (TAG ID).

In an implementation, the correspondence between the BWP and the TAG ID includes at least one of:
a TAG ID to which the BWP belongs; or
a BWP corresponding to a specific TAG ID.

In an implementation, the method further includes the following.

In S920: the second communication device transmits a first timing advance adjustment command, where the first timing advance adjustment command is used for indicating a target TAG ID, and the target TAG ID corresponds to each BWP.

In an implementation, the configuration information is further used for configuring a correspondence between a carrier and/or a cell and timing advance information.

In an implementation, the correspondence between the carrier and/or the cell and the timing advance information includes a correspondence between the carrier and/or the cell and a TAG ID.

In an implementation, the correspondence between the carrier and/or the cell and the TAG ID includes at least one of:
a TAG ID to which the carrier belongs;
a TAG ID to which the cell belongs;
a carrier corresponding to a specific TAG ID; or
a cell corresponding to a specific TAG ID.

In an implementation, the method further includes: transmitting, by the second communication device, a second timing advance adjustment command, where the second timing advance adjustment command is used for indicating a target TAG ID, and the target TAG ID corresponds to at least one of each carrier, each cell, each BWP in each carrier or each BWP in each cell. The transmitting of the second timing advance adjustment command by the second communication device and the transmitting of the first timing advance adjustment command by the second communication device may be two parallel manners. For example, if the target TAG ID that the network device needs to indicate corresponds to more than just the BWP, the network device may transmit the second timing advance adjustment command to the terminal device.

For specific examples of the second communication device performing methods 700, 800 and 900 in the embodiment, reference may be made to the relevant descriptions of the communication device in the above methods 400, 500 and 600, which will not be repeated here for sake of brevity.

In the embodiments of the present application, by restricting the frequency domain resources applicable to a specific logical channel and configuring the frequency domain resources of an UL timing advance group at BWP granularity, some functions originally accomplished through the concept of a cell group in the NR system are accomplished through a cell.

### Example I: restrict a BWP applicable to a specific logical channel

In the 5G system, the network may restrict the usage of resources by the logical channel through configuring carriers or cells applicable to the logical channel. For example:
1. for logical channel 1, configuring its applicable carriers or cells as 1 and 2; and
2. for logical channel 2, configuring its applicable carriers or cells as 2 and 3.

When the network provides a resource to the UE, the network indicates to the UE the carrier or cell to which the resource belongs. The UE may select an appropriate logical channel according to the carrier or cell to which the resource belongs, to generate a MAC PDU, thereby achieving the effect of selecting appropriate frequency domain resources according to the attributes of data carried by different logical channels.

According to the technical solutions of the embodiments of the present application, since using carriers and cells to differentiate frequency domain resources may lead to much unnecessary resource consumption, using BWP as the granularity for resource filtering is more convenient.

For example, the network configures different BWPs, indicating their respective covered frequency resources, such as BWP1, BWP2, and BWP3:
1. for logical channel 1, configuring its applicable BWPs as 1 and 2; and
2. for logical channel 2, configuring its applicable BWPs as 2 and 3.

When the network provides a resource to the UE, the network indicates to the UE the BWP to which the resource belongs. The UE may select an appropriate logical channel according to the BWP to which the resource belongs, to generate a MAC PDU.

Further, the above solution may be combined with the solutions of the traditional 5G. An example is as follows.

First, the network configures different carriers, cells and BWPs within these carriers and cells, indicating their respective covered frequency resources. For example, carrier, cell A, cell B, BWP1 and BWP2 under cell A, and BWP1 and BWP2 under cell B:
1. for logical channel 1, configuring its applicable carrier, BWP1 under cell A, and BWP2 under cell B; and
2. for logical channel 2, configuring its applicable carrier, BWP2 under cell A, and BWP1 under cell B.

When the network provides a resource to the UE, the network indicates to the UE the carrier, cell and the BWP under the carrier and cell to which the resource belongs. The UE may select an appropriate logical channel according to the carrier, cell and BWP to which the resource belongs, to generate a MAC PDU.

### Example II: configure an UL timing advance group for different BWPs

In the 5G system, UL timing advance is implemented by configuring the timing advance group (TAG). The network configures the TAG IDs to which different cells belong, and cells configured with the same TAG ID use the same downlink synchronization and the same timing advance control. For example, if the UE receives the timing advance adjustment command from the network, the UE may apply the command to the cells belonging to the same TAG ID, so as to synchronously adjust the uplink timing advances of these cells.

According to the technical solutions of the embodiments of the present application, since using carriers and cells to differentiate frequency domain resources may lead to much unnecessary resource consumption, using BWP as the granularity of timing advance control is more convenient.

For example, the network configures the TAG IDs to which different BWPs belong, and BWPs configured with the same TAG ID use the same downlink synchronization and the same timing advance control. For example, if the UE receives the timing advance adjustment command from the network, the UE may apply the command to the BWPs belonging to the same TAG ID, so as to synchronously adjust the uplink timing advances of these BWPs.

Further, the above solution may be combined with the solutions of the traditional 5G. An example is as follows.

First, the network configures different carriers, cells and BWPs within these carriers and cells, indicating the TAG ID to which each belongs, for example, the TAG IDs to which carrier, cell A, cell B, BWP1 and BWP2 under cell A, and BWP1 and BWP2 under cell B respectively belong.

If the UE receives the timing advance adjustment command from the network, the UE may apply the command to the BWPs of the carriers and cells belonging to the same TAG ID, so as to synchronously adjust the uplink timing advances of the BWPs of these carriers and cells.

When the first timer of a certain TAG, e.g., timeAlignmentTimer, expires, in addition to the processing for the primary TAG, if timeAlignmentTimer is associated with an STAG, at least one of the following processes may also be performed on the serving cells, carriers or BWPs associated with the TAG: (*else if the timeAlignmentTimer is associated with an STAG, then for all Serving Cells, Carrier or BWP belonging to this TAG:* ):
flushing the HARQ buffer (*flush all HARQ buffers*);
if the PUCCH is configured, notifying the RRC layer to release the PUCCH (*notify RRC to release PUCCH, if configured*);
if the SRS is configured, notifying the RRC layer to release the SRS (*notify RRC to release SRS, if configured*);
clearing the configured downlink resource assignment and the configured uplink resource grant (*clear any configured downlink assignments and configured uplink grants*);
clearing the PUSCH resource for semi-persistent CSI reporting (*clear any PUSCH resource for semi-persistent CSI reporting*); or
maintaining the timing advance amount N_{TA} of the target TAG (*maintain N_{TA} of this TAG*).

FIG. 10 is a schematic block diagram of a first communication device 1000 according to an embodiment of the present application. The first communication device 1000 may include:
a receiving unit 1001, configured to receive configuration information, where the configuration information is used for configuring a correspondence between a bandwidth part (BWP) and user data information and/or time domain information.

In an implementation, the correspondence between the BWP and the user data information includes a correspondence between the BWP and a logical channel.

In an implementation, the correspondence between the BWP and the logical channel includes at least one of:
multiple BWPs applicable to one logical channel; or
multiple logical channels corresponding to one BWP.

In an implementation, the receiving unit 1001 is further configured to receive first indication information, where the first indication information is used for indicating a BWP to which a resource belongs.

The device further includes: a processing unit 1002, configured to select a logical channel according to the BWP to which the resource belongs, to generate a media access control protocol data unit (MAC PDU).

In an implementation, the configuration information is further used for configuring a correspondence between a carrier and/or a cell and the user data information.

In an implementation, the correspondence between the carrier and/or the cell and the user data information includes a correspondence between the carrier and/or the cell and a logical channel.

In an implementation, the correspondence between the carrier and/or the cell and the logical channel includes at least one of:
one or more carriers applicable to one logical channel;
one or more cells applicable to one logical channel;
one or more logical channels corresponding to one carrier; or
one or more logical channels corresponding to one cell.

In an implementation, the receiving unit 1001 is further configured to receive second indication information, where the second indication information is used for indicating at least one of a carrier, a cell or a BWP to which a resource belongs; and the processing unit is further configured to select a logical channel according to the at least one of the carrier, the cell or the BWP to which the resource belongs, to generate a MAC PDU.

In an implementation, the correspondence between the BWP and the time domain information includes a correspondence between the BWP and timing advance information.

In an implementation, the correspondence between the BWP and the timing advance information includes a correspondence between the BWP and a timing advance group identifier (TAG ID).

In an implementation, the correspondence between the BWP and the TAG ID includes at least one of:
a TAG ID to which the BWP belongs; or
a BWP corresponding to a specific TAG ID.

In an implementation, the receiving unit 1001 is further configured to receive a first timing advance adjustment command, where the first timing advance adjustment command is used for indicating a target TAG ID; and the processing unit is configured to apply the first timing advance adjustment command to each BWP corresponding to the target TAG ID, to synchronously adjust an uplink timing advance of each BWP corresponding to the target TAG ID.

In an implementation, the configuration information is further used for configuring a correspondence between a carrier and/or a cell and timing advance information.

In an implementation, the correspondence between the carrier and/or the cell and the timing advance information includes a correspondence between the carrier and/or the cell and a TAG ID.

In an implementation, the correspondence between the carrier and/or the cell and the TAG ID includes at least one of:
a TAG ID to which the carrier belongs;
a TAG ID to which the cell belongs;
a carrier corresponding to a specific TAG ID; or
a cell corresponding to a specific TAG ID.

In an implementation, the receiving unit 1001 is further configured to receive a second timing advance adjustment command, where the second timing advance adjustment command is used for indicating a target TAG ID; and the processing unit is further configured to apply the second timing advance adjustment command to at least one of each carrier, each cell, each BWP in each carrier or each BWP in each cell corresponding to the target TAG ID, to synchronously adjust an uplink timing advance of the at least one of each carrier, each cell, each BWP in each carrier or each BWP in each cell corresponding to the target TAG ID.

In an implementation, the processing unit 1002 is further configured to perform, in a case where a first timer of a target TAG expires, if the first timer is associated with a secondary timing advance group (STAG), at least one of the following on all serving cells, carriers or BWPs belonging to the target TAG:
flushing a hybrid automatic repeat reQuest (HARQ) buffer;
if a physical uplink control channel (PUCCH) is configured, notifying a radio resource control (RRC) layer to release the PUCCH;
if a sounding reference signal (SRS) is configured, notifying an RRC layer to release the SRS;
clearing a configured downlink resource assignment and a configured uplink grant;
clearing a physical uplink shared channel (PUSCH) resource for semi-persistent channel state information (CSI) reporting; or
maintaining a timing advance amount N_{TA} of the target TAG.

The first communication device 1000 in the embodiments of the present application is capable of implementing the corresponding functions of the first communication device in the above method embodiments. The processes, functions, implementations and beneficial effects corresponding to various modules (sub-modules, units, components, and so on) in the first communication device 1000 may refer to the corresponding descriptions of the above method embodiments, and will not be repeated here. It should be noted that the functions described with respect to the various modules (sub-modules, units, components, and so on) in the first communication device 1000 in the embodiments of the present application may be implemented by different modules (sub-modules, units, components, and so on) or by the same module (sub-module, unit, component, and so on).

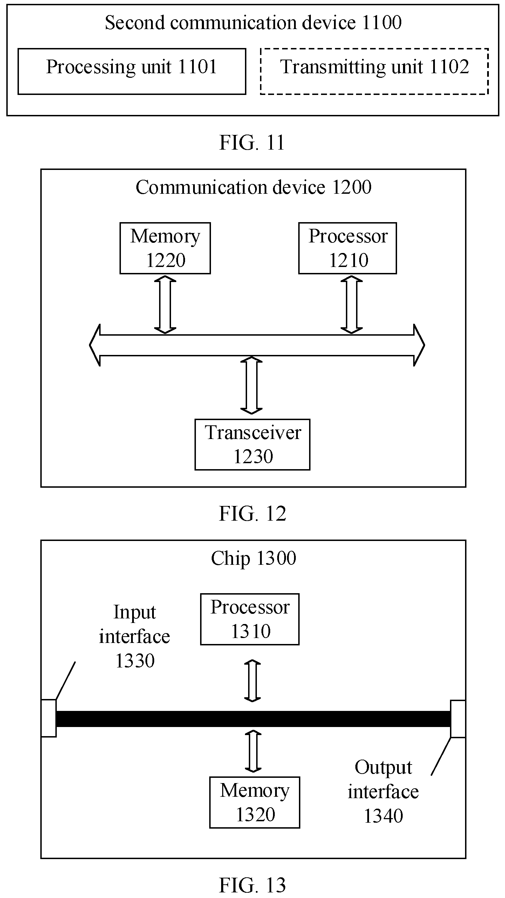

FIG. 11 is a schematic block diagram of a second communication device 1100 according to an embodiment of the present application. The second communication device 1100 may include:
a processing unit 1101, configured to configure a correspondence between a BWP and user data information and/or time domain information.

In an implementation, the device further includes:
a transmitting unit 1102, configured to transmit configuration information, where the configuration information is used for configuring the correspondence between the BWP and the user data information and/or the time domain information.

In an implementation, the correspondence between the BWP and the user data information includes a correspondence between the BWP and a logical channel.

In an implementation, the correspondence between the BWP and the logical channel includes at least one of:
multiple BWPs applicable to one logical channel; or
multiple logical channels corresponding to one BWP.

In an implementation, the transmitting unit 1102 is further configured to transmit first indication information, where the first indication information is used for indicating a BWP to which a resource belongs.

In an implementation, the configuration information is further used for configuring a correspondence between a carrier and/or a cell and the user data information.

In an implementation, the correspondence between the carrier and/or the cell and the user data information includes a correspondence between the carrier and/or the cell and a logical channel.

In an implementation, the correspondence between the carrier and/or the cell and the logical channel includes at least one of:
one or more carriers applicable to one logical channel;
one or more cells applicable to one logical channel;
one or more logical channels corresponding to one carrier; or
one or more logical channels corresponding to one cell.

In an implementation, the transmitting unit 1102 is further configured to transmit second indication information, where the second indication information is used for indicating at least one of a carrier, a cell or a BWP to which a resource belongs.

In an implementation, the correspondence between the BWP and the time domain information includes a correspondence between the BWP and timing advance information.

In an implementation, the correspondence between the BWP and the timing advance information includes a correspondence between the BWP and a timing advance group identifier (TAG ID).

In an implementation, the correspondence between the BWP and the TAG ID includes at least one of:
a TAG ID to which the BWP belongs; or
a BWP corresponding to a specific TAG ID.

In an implementation, the transmitting unit 1102 is further configured to transmit a first timing advance adjustment command, where the first timing advance adjustment command is used for indicating a target TAG ID, and the target TAG ID corresponds to each BWP.

In an implementation, the configuration information is further used for configuring a correspondence between a carrier and/or a cell and timing advance information.

In an implementation, the correspondence between the carrier and/or the cell and the timing advance information includes a correspondence between the carrier and/or the cell and a TAG ID.

In an implementation, the correspondence between the carrier and/or the cell and the TAG ID includes at least one of:
a TAG ID to which the carrier belongs;
a TAG ID to which the cell belongs;
a carrier corresponding to a specific TAG ID; or
a cell corresponding to a specific TAG ID.

In an implementation, the transmitting unit 1102 is further configured to transmit a second timing advance adjustment command, where the second timing advance adjustment command is used for indicating a target TAG ID, and the target TAG ID corresponds to at least one of each carrier, each cell, each BWP in each carrier or each BWP in each cell.

The second communication device 1100 in the embodiments of the present application is capable of implementing the corresponding functions of the second communication device in the above method embodiments. The processes, functions, implementation methods and beneficial effects corresponding to various modules (sub-modules, units, components, and so on) in the second communication device may refer to the corresponding descriptions of the above method embodiments, and will not be repeated here. It should be noted that the functions described with respect to the various modules (sub-modules, units, components, and so on) in the second communication device in the embodiments of the present application may be implemented by different modules (sub-modules, units, components, and so on) or by the same module (sub-module, unit, component, and so on).

FIG. 12 is a schematic structural diagram of a communication device 1200 according to the embodiments of the present application. The communication device 1200 includes a processor 1210, and the processor 1210 may invoke a computer program from a memory and execute the computer program, to enable the communication device 1200 to implement the methods in the embodiments of the present application.

In an implementation, the communication device 1200 may further include a memory 1220. The processor 1210 may invoke a computer program from the memory 1220 and execute the computer program, to enable the communication device 1200 to implement the methods in the embodiments of the present application.

The memory 1220 may be a separate device independent of the processor 1210, or may be integrated into the processor 1210.

In an implementation, the communication device 1200 may further include a transceiver 1230. The processor 1210 may control the transceiver 1230 to communicate with other devices, and specifically, to transmit information or data to other devices, or receive information or data transmitted by other devices.

The transceiver 1230 may include a transmitter and a receiver. The transceiver 1230 may further include antenna(s), and the number of antenna(s) may be one or more.

In an implementation, the communication device 1200 may be the first communication device in the embodiments of the present application, and the communication device 1200 may implement the corresponding procedures implemented by the first communication device in the various methods in the embodiments of the present application, which will not be repeated here for the sake of brevity.

In an implementation, the communication device 1200 may be the second communication device in the embodiments of the present application, and the communication device 1200 may implement the corresponding procedures implemented by the second communication device in the various methods in the embodiments of the present application, which will not be repeated here for the sake of brevity.

FIG. 13 is a schematic structural diagram of a chip 1300 according to the embodiments of the present application. The chip 1300 includes a processor 1310, and the processor 1310 may invoke a computer program from a memory and execute the computer program, to implement the methods in the embodiments of the present application.

In an implementation, the chip 1300 may further include a memory 1320. The processor 1310 may invoke a computer program from the memory 1320 and execute the computer program, to implement the methods performed by the first communication device or the second communication device in the embodiments of the present application.

The memory 1320 may be a separate device independent of the processor 1310, or may be integrated into the processor 1310.

In an implementation, the chip 1300 may further include an input interface 1330. The processor 1310 may control the input interface 1330 to communicate with other devices or chips, and specifically, may obtain information or data transmitted by other devices or chips.

In an implementation, the chip 1300 may further include an output interface 1340. The processor 1310 may control the output interface 1340 to communicate with other devices or chips, and specifically, may output information or data to other devices or chips.

In an implementation, the chip may be applied to the first communication device in the embodiments of the present application, and the chip may implement the corresponding procedures implemented by the first communication device in the various methods in the embodiments of the present application, which will not be repeated here for the sake of brevity.

In an implementation, the chip may be applied to the second communication device in the embodiments of the present application, and the chip may implement the corresponding procedures implemented by the second communication device in the various methods in the embodiments of the present application, which will not be repeated here for the sake of brevity.

The chip applied to the first communication device and the second communication device may be the same chip or different chips.

It should be understood that the chip mentioned in the embodiments of the present application may also be referred to as a system-level chip, a system chip, a chip system, a system-on-a-chip, or the like.

The above processor may be a general-purpose processor, a digital signal processor (DSP), a field programmable gate array (FPGA), an application specific integrated circuit (ASIC), or other programmable logic devices, transistor logic devices, discrete hardware components, or the like. The above general-purpose processor may be a microprocessor, or may also be any conventional processor, or the like.

The above memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not limiting illustration. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), ,a direct rambus RAM (DR RAM), and so on. That is, the memory in the embodiments of the present application is intended to include, but is not limited to, these and any other suitable types of memories.

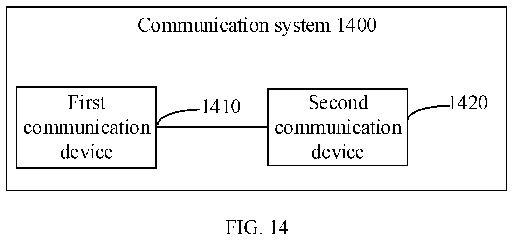

FIG. 14 is a schematic block diagram of a communication system 1400 according to the embodiments of the present application. The communication system 1400 includes a first communication device 1410 and a second communication device 1420.

The first communication device 1410 is configured to receive configuration information, where the configuration information is used for configuring a correspondence between a BWP and user data information and/or time domain information.

In an implementation, the second communication device 1420 is configured to configure a correspondence between a BWP and user data information and/or time domain information.

In an implementation, the second communication device 1420 is configured to transmit the configuration information.

The first communication device 1410 may be configured to implement the corresponding functions implemented by the first communication device in the above methods, and the second communication device 1420 may be configured to implement the corresponding functions implemented by the second communication device in the above methods, which will not be repeated here for the sake of brevity.

The above embodiments may be implemented in whole or in part through software, hardware, firmware or any combination thereof. When implemented by using software, the embodiments may be implemented in a form of a computer program product in whole or in part. The computer program product includes one or more computer instructions. When the computer program instructions are loaded on and executed by a computer, processes or functions according to the embodiments of the present application are generated in whole or in part. The computer may be a general-purpose computer, a dedicated computer, a computer network or any other programmable apparatuses. The computer instructions may be stored in a computer-readable storage medium or transmitted from one computer-readable storage medium to another computer-readable storage medium. For example, the computer instructions may be transmitted from a website, a computer, a server or a data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a digital video disc (DVD)), a semiconductor medium (e.g., a solid state disk (SSD)), or the like.

It should be understood that, in the various embodiments of the present application, the magnitude of the serial number of each of the above processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A communication method, comprising:
receiving, by a first communication device, configuration information, wherein the configuration information is used for configuring a correspondence between a bandwidth part (BWP) and user data information and/or time domain information.

2. The method according to claim 1, wherein the correspondence between the BWP and the user data information comprises a correspondence between the BWP and a logical channel.

3. The method according to claim 2, wherein the correspondence between the BWP and the logical channel comprises at least one of:
a plurality of BWPs applicable to one logical channel; or
a plurality of logical channels corresponding to one BWP.

4. The method according to claim 2 or 3, further comprising:
receiving, by the first communication device, first indication information, wherein the first indication information is used for indicating a BWP to which a resource belongs; and
selecting, by the first communication device, a logical channel according to the BWP to which the resource belongs, to generate a media access control protocol data unit (MAC-PDU).

5. The method according to any one of claims 1 to 3, wherein the configuration information is further used for configuring a correspondence between a carrier and/or a cell and the user data information.

6. The method according to claim 5, wherein the correspondence between the carrier and/or the cell and the user data information comprises a correspondence between the carrier and/or the cell and a logical channel.

7. The method according to claim 6, wherein the correspondence between the carrier and/or the cell and the logical channel comprises at least one of:
one or more carriers applicable to one logical channel;
one or more cells applicable to one logical channel;
one or more logical channels corresponding to one carrier; or
one or more logical channels corresponding to one cell.

8. The method according to claim 6 or 7, further comprising:
receiving, by the first communication device, second indication information, wherein the second indication information is used for indicating at least one of a carrier, a cell or a BWP to which a resource belongs; and
selecting, by the first communication device, a logical channel according to the at least one of the carrier, the cell or the BWP to which the resource belongs, to generate a MAC-PDU.

9. The method according to claim 1, wherein the correspondence between the BWP and the time domain information comprises a correspondence between the BWP and timing advance information.

10. The method according to claim 9, wherein the correspondence between the BWP and the timing advance information comprises a correspondence between the BWP and a timing advance group identifier (TAG ID).

11. The method according to claim 10, wherein the correspondence between the BWP and the TAG ID comprises at least one of:
a TAG ID to which the BWP belongs; or
a BWP corresponding to a specific TAG ID.

12. The method according to claim 10 or 11, further comprising:
receiving, by the first communication device, a first timing advance adjustment command, wherein the first timing advance adjustment command is used for indicating a target TAG ID; and
applying, by the first communication device, the first timing advance adjustment command to each BWP corresponding to the target TAG ID, to synchronously adjust an uplink timing advance of each BWP corresponding to the target TAG ID.

13. The method according to any one of claims 1 and 9 to 11, wherein the configuration information is further used for configuring a correspondence between a carrier and/or a cell and timing advance information.

14. The method according to claim 13, wherein the correspondence between the carrier and/or the cell and the timing advance information comprises a correspondence between the carrier and/or the cell and a TAG ID.

15. The method according to claim 14, wherein the correspondence between the carrier and/or the cell and the TAG ID comprises at least one of:
a TAG ID to which the carrier belongs;
a TAG ID to which the cell belongs;
a carrier corresponding to a specific TAG ID; or
a cell corresponding to a specific TAG ID.

16. The method according to claim 15, further comprising:
receiving, by the first communication device, a second timing advance adjustment command, wherein the second timing advance adjustment command is used for indicating a target TAG ID; and
applying, by the first communication device, the second timing advance adjustment command to at least one of each carrier, each cell, each BWP in each carrier or each BWP in each cell corresponding to the target TAG ID, to synchronously adjust an uplink timing advance of the at least one of each carrier, each cell, each BWP in each carrier or each BWP in each cell corresponding to the target TAG ID.

17. The method according to claim 12 or 16, further comprising:
in a case where a first timer of a target TAG expires, if the first timer is associated with a secondary timing advance group (STAG), performing, by the first communication device, at least one of the following on all serving cells, carriers or BWPs belonging to the target TAG:
flushing a hybrid automatic repeat reQuest (HARQ) buffer;
if a physical uplink control channel (PUCCH) is configured, notifying a radio resource control (RRC) layer to release the PUCCH;
if a sounding reference signal (SRS) is configured, notifying an RRC layer to release the SRS;
clearing a configured downlink resource assignment and a configured uplink resource grant;
clearing a physical uplink shared channel (PUSCH) resource for semi-persistent channel state information (CSI) reporting; or
maintaining a timing advance amount N_{TA} of the target TAG.

18. A communication method, comprising:
configuring, by a second communication device, a correspondence between a bandwidth part (BWP) and user data information and/or time domain information.

19. The method according to claim 18, further comprising:
transmitting, by the second communication device, configuration information, wherein the configuration information is used for configuring the correspondence between the BWP and the user data information and/or the time domain information.

20. The method according to claim 19, wherein the correspondence between the BWP and the user data information comprises a correspondence between the BWP and a logical channel.

21. The method according to claim 20, wherein the correspondence between the BWP and the logical channel comprises at least one of:
a plurality of BWPs applicable to one logical channel; or
a plurality of logical channels corresponding to one BWP.

22. The method according to claim 20 or 21, further comprising:
transmitting, by the second communication device, first indication information, wherein the first indication information is used for indicating a BWP to which a resource belongs.

23. The method according to any one of claims 19 to 21, wherein the configuration information is further used for configuring a correspondence between a carrier and/or a cell and the user data information.

24. The method according to claim 23, wherein the correspondence between the carrier and/or the cell and the user data information comprises a correspondence between the carrier and/or the cell and a logical channel.

25. The method according to claim 24, wherein the correspondence between the carrier and/or the cell and the logical channel comprises at least one of:
one or more carriers applicable to one logical channel;
one or more cells applicable to one logical channel;
one or more logical channels corresponding to one carrier; or
one or more logical channels corresponding to one cell.

26. The method according to claim 24 or 25, further comprising:
transmitting, by the second communication device, second indication information, wherein the second indication information is used for indicating at least one of a carrier, a cell or a BWP to which a resource belongs.

27. The method according to claim 19, wherein the correspondence between the BWP and the time domain information comprises a correspondence between the BWP and timing advance information.

28. The method according to claim 27, wherein the correspondence between the BWP and the timing advance information comprises a correspondence between the BWP and a timing advance group identifier (TAG ID).

29. The method according to claim 28, wherein the correspondence between the BWP and the TAG ID comprises at least one of:
a TAG ID to which the BWP belongs; or
a BWP corresponding to a specific TAG ID.

30. The method according to claim 28 or 20, further comprising:
transmitting, by the second communication device, a first timing advance adjustment command, wherein the first timing advance adjustment command is used for indicating a target TAG ID, and the target TAG ID corresponds to each BWP.

31. The method according to any one of claims 19 and 27 to 20, wherein the configuration information is further used for configuring a correspondence between a carrier and/or a cell and timing advance information.

32. The method according to claim 31, wherein the correspondence between the carrier and/or the cell and the timing advance information comprises a correspondence between the carrier and/or the cell and a TAG ID.

33. The method according to claim 32, wherein the correspondence between the carrier and/or the cell and the TAG ID comprises at least one of:
a TAG ID to which the carrier belongs;
a TAG ID to which the cell belongs;
a carrier corresponding to a specific TAG ID; or
a cell corresponding to a specific TAG ID.

34. The method according to claim 33, further comprising:
transmitting, by the second communication device, a second timing advance adjustment command, wherein the second timing advance adjustment command is used for indicating a target TAG ID, and the target TAG ID corresponds to at least one of each carrier, each cell, each BWP in each carrier or each BWP in each cell.

35. A first communication device, comprising:
a receiving unit, configured to receive configuration information, wherein the configuration information is used for configuring a correspondence between a bandwidth part (BWP) and user data information and/or time domain information.

36. The device according to claim 35, wherein the correspondence between the BWP and the user data information comprises a correspondence between the BWP and a logical channel.

37. The device according to claim 36, wherein the correspondence between the BWP and the logical channel comprises at least one of:
a plurality of BWPs applicable to one logical channel; or
a plurality of logical channels corresponding to one BWP.

38. The device according to claim 36 or 37, wherein the receiving unit is further configured to receive first indication information, wherein the first indication information is used for indicating a BWP to which a resource belongs; and
the device further comprises: a processing unit, configured to select a logical channel according to the BWP to which the resource belongs, to generate a media access control protocol data unit (MAC-PDU).

39. The device according to any one of claims 35 to 37, wherein the configuration information is further used for configuring a correspondence between a carrier and/or a cell and the user data information.

40. The apparatus according to claim 39, wherein the correspondence between the carrier and/or the cell and the user data information comprises a correspondence between the carrier and/or the cell and a logical channel.

41. The device according to claim 40, wherein the correspondence between the carrier and/or the cell and the logical channel comprises at least one of:
one or more carriers applicable to one logical channel;
one or more cells applicable to one logical channel;
one or more logical channels corresponding to one carrier; or
one or more logical channels corresponding to one cell.

42. The device according to claim 40 or 41, wherein the receiving unit is further configured to receive second indication information, wherein the second indication information is used for indicating at least one of a carrier, a cell or a BWP to which a resource belongs; and
the device further comprises: a processing unit, configured to select a logical channel according to the at least one of the carrier, the cell or the BWP to which the resource belongs, to generate a MAC-PDU.

43. The device according to claim 35, wherein the correspondence between the BWP and the time domain information comprises a correspondence between the BWP and timing advance information.

44. The device according to claim 43, wherein the correspondence between the BWP and the timing advance information comprises a correspondence between the BWP and a timing advance group identifier (TAG ID).

45. The device according to claim 44, wherein the correspondence between the BWP and the TAG ID comprises at least one of:
a TAG ID to which the BWP belongs; or
a BWP corresponding to a specific TAG ID.

46. The device according to claim 44 or 45, wherein the receiving unit is further configured to receive a first timing advance adjustment command, wherein the first timing advance adjustment command is used for indicating a target TAG ID; and
the device further comprises: a processing unit, configured to apply the first timing advance adjustment command to each BWP corresponding to the target TAG ID, to synchronously adjust an uplink timing advance of each BWP corresponding to the target TAG ID.

47. The device according to any one of claims 35 and 43 to 45, wherein the configuration information is further used for configuring a correspondence between a carrier and/or a cell and timing advance information.

48. The device according to claim 47, wherein the correspondence between the carrier and/or the cell and the timing advance information comprises a correspondence between the carrier and/or the cell and a TAG ID.

49. The device according to claim 48, wherein the correspondence between the carrier and/or the cell and the TAG ID comprises at least one of:
a TAG ID to which the carrier belongs;
a TAG ID to which the cell belongs;
a carrier corresponding to a specific TAG ID; or
a cell corresponding to a specific TAG ID.

50. The device according to claim 49, wherein the receiving unit is further configured to receive a second timing advance adjustment command, wherein the second timing advance adjustment command is used for indicating a target TAG ID; and
the device further comprises: a processing unit, configured to apply the second timing advance adjustment command to at least one of each carrier, each cell, each BWP in each carrier or each BWP in each cell corresponding to the target TAG ID, to synchronously adjust an uplink timing advance of the at least one of each carrier, each cell, each BWP in each carrier or each BWP in each cell corresponding to the target TAG ID.

51. The device according to claim 46 or 50, wherein the processing unit is further configured to perform, in a case where a first timer of a target TAG expires, if the first timer is associated with a secondary timing advance group (STAG), at least one of the following on all serving cells, carriers or BWPs belonging to the target TAG:
flushing a hybrid automatic repeat reQuest (HARQ) buffer;
if a physical uplink control channel (PUCCH) is configured, notifying a radio resource control (RRC) layer to release the PUCCH;
if a sounding reference signal (SRS) is configured, notifying an RRC layer to release the SRS;
clearing a configured downlink resource assignment and a configured uplink resource grant;
clearing a physical uplink shared channel (PUSCH) resource for semi-persistent channel state information (CSI) reporting; or
maintaining a timing advance amount N_{TA} of the target TAG.

52. A second communication device, comprising:
a processing unit, configured to configure a correspondence between a bandwidth part (BWP) and user data information and/or time domain information.

53. The device according to claim 52, wherein the device further comprises:
a transmitting unit, configured to transmit configuration information, wherein the configuration information is used for configuring the correspondence between the BWP and the user data information and/or the time domain information.

54. The device according to claim 53, wherein the correspondence between the BWP and the user data information comprises a correspondence between the BWP and a logical channel.

55. The device according to claim 54, wherein the correspondence between the BWP and the logical channel comprises at least one of:
a plurality of BWPs applicable to one logical channel; or
a plurality of logical channels corresponding to one BWP.

56. The device according to claim 54 or 55, wherein the transmitting unit is further configured to transmit first indication information, wherein the first indication information is used for indicating a BWP to which a resource belongs.

57. The device according to any one of claims 53 to 55, wherein the configuration information is further used for configuring a correspondence between a carrier and/or a cell and the user data information.

58. The device according to claim 57, wherein the correspondence between the carrier and/or the cell and the user data information comprises a correspondence between the carrier and/or the cell and a logical channel.

59. The device according to claim 58, wherein the correspondence between the carrier and/or the cell and the logical channel comprises at least one of:
one or more carriers applicable to one logical channel;
one or more cells applicable to one logical channel;
one or more logical channels corresponding to one carrier; or
one or more logical channels corresponding to one cell.

60. The device according to claim 58 or 59, further comprising:
a transmitting unit, configured for the device to transmit second indication information, wherein the second indication information is used for indicating at least one of a carrier, a cell or a BWP to which a resource belongs.

61. The device according to claim 53, wherein the correspondence between the BWP and the time domain information comprises a correspondence between the BWP and timing advance information.

62. The device according to claim 61, wherein the correspondence between the BWP and the timing advance information comprises a correspondence between the BWP and a timing advance group identifier (TAG ID).

63. The device according to claim 62, wherein the correspondence between the BWP and the TAG ID comprises at least one of:
a TAG ID to which the BWP belongs; or
a BWP corresponding to a specific TAG ID.

64. The device according to claim 62 or 63, wherein the transmitting unit is further configured to transmit a first timing advance adjustment command, wherein the first timing advance adjustment command is used for indicating a target TAG ID, and the target TAG ID corresponds to each BWP.

65. The device according to any one of claims 53 and 61 to 63, wherein the configuration information is further used for configuring a correspondence between a carrier and/or a cell and timing advance information.

66. The device according to claim 65, wherein the correspondence between the carrier and/or the cell and the timing advance information comprises a correspondence between the carrier and/or the cell and a TAG ID.

67. The device according to claim 66, wherein the correspondence between the carrier and/or the cell and the TAG ID comprises at least one of:
a TAG ID to which the carrier belongs;
a TAG ID to which the cell belongs;
a carrier corresponding to a specific TAG ID; or
a cell corresponding to a specific TAG ID.

68. The device according to claim 67, wherein the transmitting unit is further configured to transmit a second timing advance adjustment command, wherein the second timing advance adjustment command is used for indicating a target TAG ID, and the target TAG ID corresponds to at least one of each carrier, each cell, each BWP in each carrier or each BWP in each cell.

69. A communication device, comprising: a transceiver, a processor, and a memory, wherein the memory is configured to store a computer program, the transceiver is configured to communicate with other devices, and the processor is configured to invoke the computer program stored in the memory and execute the computer program, to cause the communication device to perform the method according to any one of claims 1 to 34.

70. A chip, comprising: a processor, configured to invoke a computer program from a memory and execute the computer program, to cause a device equipped with the chip to perform the method according to any one of claims 1 to 34.

71. A computer-readable storage medium, configured to store a computer program, wherein the computer program, when executed by a device, causes the device to perform the method according to any one of claims 1 to 34.

72. A computer program product, comprising computer program instructions, wherein the computer program instructions cause a computer to perform the method according to any one of claims 1 to 34.

73. A computer program, wherein the computer program causes a computer to perform the method according to any one of claims 1 to 34.

74. A communication system, comprising:
a first communication device, configured to perform the method according to any one of claims 1 to 17; and
a second communication device, configured to perform the method according to any one of claims 18 to 34.
